# EUROPEAN PATENT APPLICATION

(11) **EP 1 056 239 A2**
(43) Date of publication of application: **29.11.2000**
(21) Application number: 00110831.5
(22) Date of filing: 22.05.2000
(51) Int. Cl.: H04L 1/22

(54) **Apparatus and method for switching between redundant communication devices**

(30) Priority: 24.05.1999 JP 14329899
(71) Applicant: MATSUSHITA ELECTRIC INDUSTRIAL CO., LTD., Kadoma-shi, Osaka 571-8501 (JP)
(72) Inventor: Takahashi, Yashushi, Yokohama-shi, Kanagawa 236-0052 (JP)
(74) Representative: Grünecker, Kinkeldey, Stockmair & Schwanhäusser Anwaltssozietät

(57) **Abstract**

The redundant switching control apparatus of the present invention has a redundant configuration of an operational system and standby system, comprising two control sections 101 and 102, one operating as the operational system controlling the controlled section, with these two control sections connected via signal lines 107 and 108 carrying signals indicating one of a normal/abnormal state, mounted/unmounted state, switching enabled/disabled state or operating/non-operating state of own control section 101 to other control section 102 and performs switching between the operational system and standby system by mutually recognizing the state of other control section 102 from said signal of other control section 102 via signal lines 107 and 108 between these control sections.

## Description

### BACKGROUND OF THE INVENTION

### Field of the Invention

The present invention relates to a redundant switching control apparatus with two control sections, operational and standby, of a same configuration, and in particular, to an apparatus and method for redundant switching control ideally suited to telecommunication station equipment, etc. where it is essential to provide stable services by continuing operation even in the event of a fault.

### Description of the Related Art

Conventionally, for the purpose of improving reliability of an entire system of telecommunication station equipment, etc., a redundant configuration is adopted to functional sections critical to continuous operation of the system by having a standby system take over internal information and operating the standby system as a new operational system in the event of a fault or when replacing or before switching the corresponding operational system apparatus so that the system continues to operate without interruption.

This type of redundant switching control apparatus and method are described in the Japanese Patent Publication No.2750224.

The description above refers to reliable switching control, even in the case where the switching section fails or the switching section is not incorporated, by providing control signal lines between both control sections to implement switching in the event of a fault in the operational system control section.

However, the conventional apparatus has various problems such as the necessity of providing a functional section (switching section) to perform control over the status of the redundant control sections and control over a switching command from an upstream monitoring apparatus, which will complicate the configuration and control of the apparatus as a whole and originate an additional need to consider influences of the fault in the switching section itself on the entire apparatus.

The system described in the Publication above also has a problem of rather increasing the complexity in the overall configuration of the apparatus because normal switching control is implemented using a conventional switching section.

It also has another problem of structural complexity because control such as specification of the initial operational system when both systems are started and prohibition of switching back, etc. is implemented by different hardware or software.

### SUMMARY OF THE INVENTION

It is an objective of the present invention to provide an apparatus and method for redundant switching control capable of configuring, without complexity, control functions such as a function of controlling switching between the redundant control sections of operational and standby systems, specification of the initial operational system when both systems are started and prohibition of switching back.

A main subject of the present invention is to connect two control sections in an operating/standby redundant system, one functioning as the operational system to control the controlled section via signal lines that carry signals indicating the status of one control section to the other control section and have both control sections recognize the status of each other from the signals above via these signal lines allowing switching over to either the operational system or standby system.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG.1 is a block diagram showing a configuration of a redundant switching control apparatus according to an embodiment of the present invention;
FIG.2 is a block diagram showing signals transmitted through signal lines connecting between two control sections of the redundant switching control apparatus according to the embodiment above; and
FIG.3 is a flow chart to explain the operation of processing of determining the operational system upon startup of the redundant switching control apparatus according to the embodiment above.

### DETAILED DESCRIPTION OF THE PREFERRED EMBODIMENT

With reference now to the attached drawings, an embodiment of the present invention is explained in detail below.

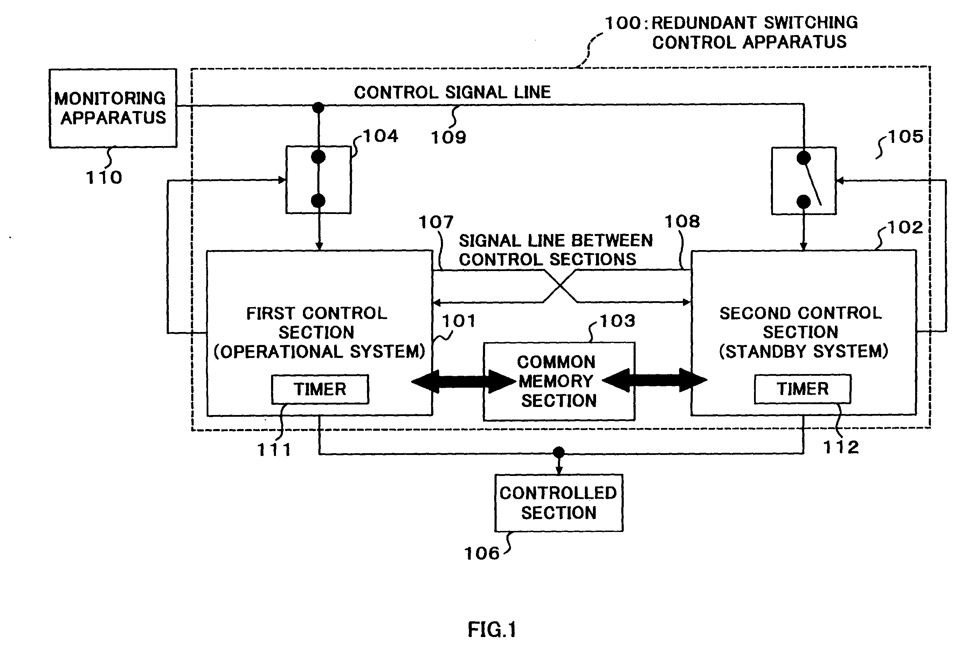

FIG.1 is a block diagram showing a configuration of a redundant switching control apparatus according to an embodiment of the present invention.

Redundant switching control apparatus 100 shown in FIG.1 is intended for use, for example, in a section performing call control of a base station apparatus in a mobile communication system where it is imperative to continue operation even if a fault occurs and comprises first and second control sections 101 and 102, common memory section 103, first and second switches 104 and 105.

First and second control sections 101 and 102 have an identical configuration - one operating as an operational system and the other operating as a standby system - and the operational system is designed to have control (for example, communication control) over controlled section 106 such as a communication apparatus, both of which are connected via signal lines 107 and 108 connecting between the control sections to allow one to know the status of the other and receive a switching command, etc. from the other.

Furthermore, first and second control sections 101 and 102 are connected to monitoring apparatus 110 for a supervisor to monitor the equipment via first and second switches 104 and 105 so that these control sections receive a switching command, etc. from monitoring apparatus 110. However, it is only the control section (for example, 101) operating as an operational system that actually receives a switching command from the upstream.

Furthermore, first and second control sections 101 and 102 are provided with timers 111 and 112 and these timers 111 and 112 are used to set a maximum time to determine the startup condition of the control section at startup after a reset, etc.

Common memory section 103 is shared by first and second control sections 101 and 102 to write/read data, for example, to save information to be transferred at the time of switching between the operational and standby systems.

First and second switches 104 and 105 are turned ON/OFF under the control of first and second control sections 101 and 102. As shown in FIG.1, for example, if first control section 101 functions as an operational system, switch 104 is turned ON and second switch 105 is turned OFF.

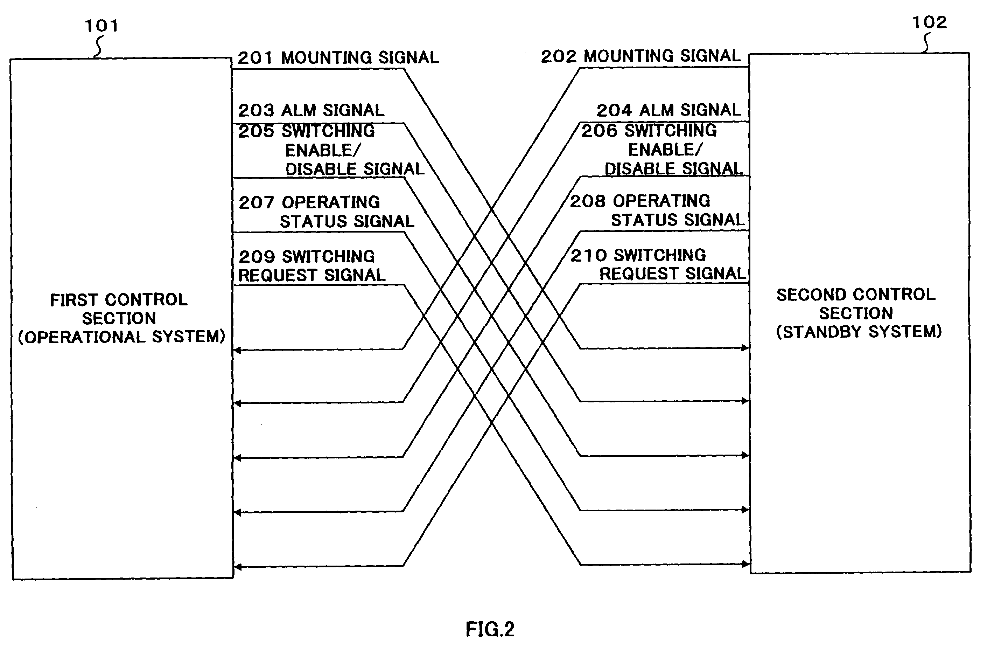

Then, with reference to FIG.2, signals which are sent from one of first and second control section 101 and 102 to the other via signal lines 107 and 108 are explained.

First control section 101 sends mounting signal 201, ALM (alarm) signal 203, switching enable/disable signal 205, operating status signal 207 and switching request signal 209 to second control section 102 via signal line 107 between the control sections, and second control section 102 sends mounting signal 202, ALM (alarm) signal 204, switching enable/disable signal 206, operating status signal 208 and switching request signal 210 to first control section 101 via signal line 108 between the control sections.

Here, signals having a common name between first and second control sections indicate a same content, and therefore only one side of them is explained below.

Mounting signal 201 (or 202) always notifies other control section 102 of the mounting status of own control section 101. Here, the status indicated by mounting signal 201 is either "mounted" or "unmounted".

ALM signal 203 (or 204) notifies other control section 102 of the status monitored by hardware and software of own control section 101. Here, the status indicated by ALM signal 203 is either a normal operating state indicating that own control section 101 is operating normally or an ALM state indicating that an error has occurred. This ALM state can have a plurality of states according to the level of the fault.

Switching enable/disable signal 205 (or 206) is used for operational system control section 101 to enable/disable execution of switching control by standby system control section 102. Here, the status indicated by switching enable/disable signal 205 is either a "switching enabled" state or "switching disabled" state of the own control section. Furthermore, determination of the operational system or standby system at the time of initial startup or switching back prohibition control is also implemented using this signal. Moreover, even if switching enable/disable signal 205 indicates a "switching disabled" state, priority is given to control by mounting signal 201 and ALM signal 203. Furthermore, there are two types of switching disable time; a fixed time of 10 sec or 1 minute and an indefinite time until certain processing ends.

Operating status signal 207 (or 208) notifies other control section 102 of whether own control section 101 is operating or not. Here, the status indicated by operating status signal 207 is "operating" or "non-operating".

Switching request signal 209 (or 210) is used to have standby control section 102 start switching control when operational system control section 101 receives a switching command from monitoring apparatus 110. That is, switching request signal 209 carries a switching request that instructs the standby system to start switching control.

Furthermore, the standby system control section (for example, 102) keeps constant watch on or waits for a chance to interrupt mounting signal 201 and ALM signal 203 of other control section 101, and upon detection of an "unmounted" or abnormal state, the standby system control section immediately executes switching control to become the operational system. Information to be transferred to control section 102, which becomes the new operational system after the switching, is stored in common memory section 103 and control section 102, which becomes the new operational system acquires the access right to have access to common memory section 103 by setting operating status signals 207 and 208 to "operating".

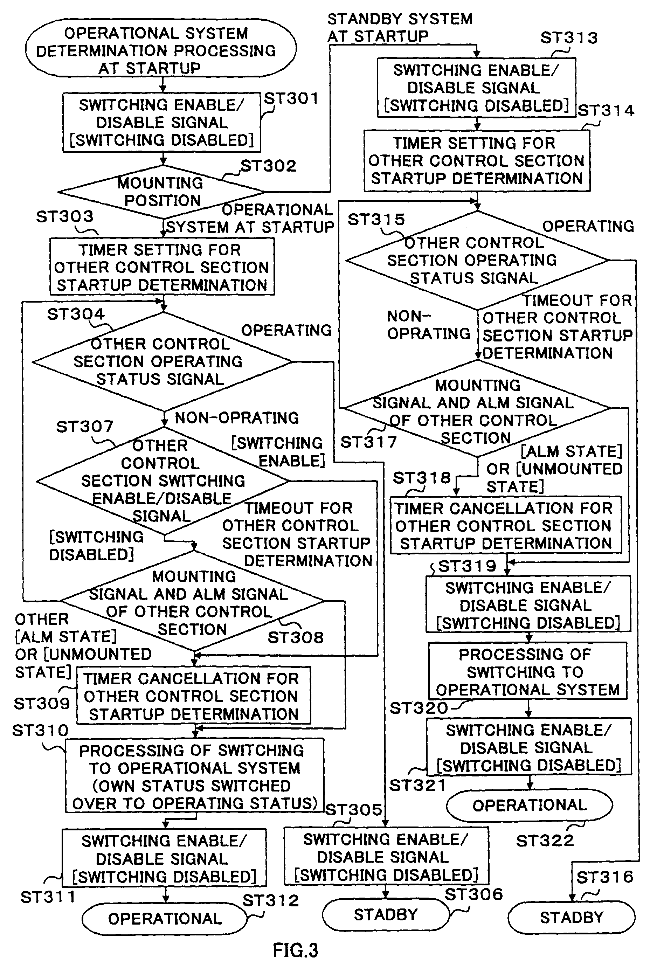

The operation of processing of determining the operational system upon startup of redundant switching control apparatus 100 having such a configuration is explained with reference to a flow chart shown in FIG.3.

This is the method to operate both of redundant control sections 101 and 102 by same hardware and software, however it is also applicable when only one control section (for example, control section 101) is started or other control section 102 is started while only control section 101 is operating.

In ST301, upon startup such as after a reset, both operating/standby system control sections 101 and 102 set switching enable/disable signals 205 and 206 to a switching disabled state.

In ST302, the operational system or standby system is determined according to the mounting positions of control sections 101 and 102. The mounting positions refer to positions on an apparatus rack on which control sections 101 and 102 are mounted and the operational system or standby system is determined according to these positions.

For example, when focused on first control section 101, if this first control section 101 is mounted as the operational system at startup, in ST303, first control section 101 sets a maximum time for determining the startup status of the other control section 102 at startup (startup determination) in timer 111.

After this setting, in ST304, first control section 101 determines whether operating status signal 207 of other control section 102 is "operating" or "non-operating" (status other than operating status). If the determination result shows that operating status signal 207 is "operating", in ST305, first control section 101 sets switching enable/disable signal 205 to a switching enabled status, and then enters into a standby state in ST306.

On the other hand, if the determination result shows that operating status signal 207 is "non-operating", in ST307, it is determined whether switching enable/disable signal 205 of other control section 102 is "switching enabled" or "switching disabled."

If this determination result indicates "switching disabled", in ST308, first control section 101 determines whether mounting signal 201 of other control section 102 is "unmounted" or not, or whether ALM signal 203 is an ALM state or not. In the case of either an unmounted state or ALM state, in ST309, first control section 101 cancels timer 111, and in ST310, transfers processing to the operational system, and in ST311, sets switching enable/disable signal 205 to "switching enabled" and then in ST312, becomes the operational system.

On the other hand, in ST308, if other control section 102 is not in an unmounted state nor in an ALM state, that is, if other control section 102 is normal and in a mounted state, it is determined whether timer 111 has timed out or not. If this determination result shows that timer 111 has timed out, processing from ST310 onward is carried out and first control section 101 becomes the operational system.

Furthermore, in ST308, if other control section 102 is not in an unmounted state nor in an ALM state nor has any timeout taken place, processing goes back to ST304 and the same processing described above is repeated.

Then, the determination result in ST302 shows that first control section 101 is mounted as the standby system at startup, in ST313, switching enable/disable signal 205 is set to "switching enabled", and in ST314, a maximum time for determining the startup status of other control section 102 at startup (startup determination) is set in timer 111.

After this setting, in ST315, first control section 101 determines whether operating status signal 207 of other control section 102 is "operating" or "non-operating" (status other than operating status). If this determination result shows that operating status signal 207 is " operating", in ST316, first control section 101 enters into a standby state.

In ST317, first control section 101 determines whether mounting signal 201 of other control section 102 is in an unmounted state or not, or whether ALM signal 203 is in an ALM state or not. In the case of either an unmounted state or ALM state, in ST318, first control section 101 cancels timer 111, and in ST319 sets switching enable/disable signal 205 to "switching disabled", and in ST320 transfers processing to the operational system, and in ST321 sets switching enable/disable signal 205 to "switching enabled" and then in ST322, becomes the operational system.

On the other hand, in ST317, if other control section 102 is not in an unmounted state nor in an ALM state, that is, if other control section 102 is normal and in a mounted state, it is determined whether timer 111 has timed out or not. If this determination result shows a timeout, processing from ST319 onward is carried out and first control section 101 becomes the operational system.

Furthermore, in ST317, if other control section 102 is not in an unmounted state nor in an ALM state nor has any timeout taken place, processing goes back to ST315 and the same processing described above is repeated.

However, in the processing in ST310 and ST320, when first control section 101 starts operating as the operational system, keeping switching enable/disable signal 205 in a switching disabled state for a certain period of time makes it possible to provide a period of preventing switching immediately after switching, that is, "switching back." This puts the processing in ST311 and ST321 on hold for a certain period of time, enabling switching prevention during that period.

Furthermore, with respect to switching prevention during operation, switching control by the maintenance system can be prevented by the control section in the operational system setting switching enable/disable signal 205 to "switching disabled."

Furthermore, when redundant switching control occurs during operation, the control section operating as the operational system after switching can implement switching prevention by notifying "switching disabled" to the other control section using switching enable/disable signal 205.

As shown above, the redundant switching control apparatus of the present embodiment connects redundant control sections 101 and 102 via signal lines 107 and 108 between the control sections, operates mounting signals 201 and 202, ALM signals 203 and 204, switching enable/disable signals 205 and 206, operating status signals 207 and 208 and switching request signals 209 and 210, and in this way can implement redundant switching control and determination of the operational system at startup without providing any switching section as in the case of the prior art.

This avoids complexity in the configuration and control of the entire apparatus and eliminates the need to consider influences of a fault in the switching section itself on the entire apparatus.

Furthermore, if the operational system is fixed when redundant control sections 101 and 102 are started simultaneously, by control sections 101 and 102 recognizing their respective operating/standby mounting positions at startup, setting the switching enable/disable signal (e.g., 205) of the system mounted at the operating position to "switching disabled" based on the mounting position information, and setting disable signal 122 of the system mounted at the standby position to "switching enabled", it is possible to specify the operational system in a fixed manner through system determination performed by each of control sections 101 and 102.

Furthermore, if upstream monitoring apparatus 110 instructs switching of the system during operation in a redundant configuration, it is possible to implement switching by exercising switching control using switching request signal 209 for switching between control sections 101 and 102 without the need for any external apparatus.

Furthermore, the control section (e.g., 101) that has become the operational system after switching can prevent continuous switching control from monitoring apparatus 110 by keeping switching enable/disable signal 205 in a disabled state for a certain period of time immediately after the switching.

That is, redundant switching control apparatus 100 using signal lines 107 and 108 between the control sections can perform redundant switching control without providing any switching section as in the case of the prior art, reduce the size of the apparatus and integrate the software structure such as switching processing, system determination processing and switching back prohibition, etc. with signal line monitoring control, thus making it possible to simplify the structure and development of the system, proving extremely effective in practical use.

The redundant switching control apparatus of the present invention has a redundant configuration of operational and standby systems, comprising two control sections one of which operates as the operational system and controls the controlled section and both are connected via signal lines to carry signals for switching from the operational system to the standby system or from the standby system to the operational system and through these signal lines both sections can recognize the status of each other from the signal above, thereby switching over to either the operational system or standby system.

According to this configuration, it is possible to implement redundant switching control or determination of the operational system at startup without providing any conventional switching section as in the case of the prior art, which avoids complexity of the configuration and control of the entire apparatus, furthermore eliminating the need to consider influences of a fault in the switching section itself on the entire apparatus.

The redundant switching control apparatus of the present invention in the above configuration comprises the two control sections further provided with a function of mutually transmitting an alarm signal indicating whether one is in a normal state or abnormal state to the other via signal lines.

According to this configuration, if the above alarm signal of the operational system control section indicates an abnormal state, the standby system control section recognizes this abnormal state, and thus can switch over to the operational system.

The redundant switching control apparatus of the present invention in the above configuration comprises the two control sections further provided with a function of mutually transmitting a mounting signal indicating whether one is in a mounted state or unmounted state to the other via signal lines.

According to this configuration, if the above mounting signal of the other control section indicates an unmounted state, the own control section recognizes this unmounted state, and thus can switch over to the operational system.

The redundant switching control apparatus of the present invention in the above configuration comprises the two control sections further provided with a function of mutually transmitting a switching enable/disable signal indicating whether one is in a switching enabled or switching disabled state to the other via signal lines, and if the above two control sections are started simultaneously, the operational system control section sets the switching enable/disable signal of the own section to a switching disabled state and the standby system control section sets the switching enable/disable signal to a switching enabled state.

According to this configuration, it is possible to set the operational system control section to a switching disabled state through the switching enable/disable signal, making it possible to specify the operational system and standby system in a fixed manner if the two control sections are started simultaneously, etc.

The redundant switching control apparatus of the present invention in the above configuration comprises the two control sections further provided with a function of mutually transmitting an operating status signal indicating whether one is operating or not to the other via signal lines.

According to this configuration, when the two control sections are started simultaneously, etc., if the operating status signal of the other control section indicates an operating status, the own control section recognizes this operating status, and thus can switch over to the standby system.

The redundant switching control apparatus of the present invention in the above configuration comprises the two control sections further provided with a timer section, and when the two control sections above are started simultaneously, the operational system control section sets an arbitrary timing in the timer section of the own section and determines the state of the other control section from at least one of an operating status signal, switching enable/disable signal, mounting signal and alarm signal to switch between the operational and standby systems within this set time and switches over to either the operational system or standby system according to this determination result.

According to this configuration, when the two control sections are started simultaneously, the control section mounted in the mounting position of the operational system recognizes the status of the other control section and is switched over to the operational system or standby system only during a set time, allowing quick and appropriate switching between the operational and standby systems without misoperation when a restart, etc. is executed.

The redundant switching control apparatus of the present invention has, when the two control sections in the above configuration are started simultaneously, such a configuration that the standby system control section sets an arbitrary timing in the timer section of the own section and determines the state of the other control section from an operating status signal, mounting signal and alarm signal to mutually switch between the operational and standby systems within this set time and switches over to either the operational system or standby system according to this determination result.

According to this configuration, when the two control sections are started simultaneously, the control section mounted in the mounting position of the standby system recognizes the status of the other control section and is switched over to the operational system or standby system only during a set time, allowing quick and appropriate switching between the operational and standby systems without misoperation when a restart, etc. is executed.

The redundant switching control apparatus of the present invention in the above configuration has such a configuration that a monitoring apparatus that monitors this operating status is connected to the two control sections via a switching section that performs ON/OFF operation, and if either control section becomes the operational system, the control section of the operational system turns ON the above switch section, and turns OFF if that control section becomes the standby system. This configuration allows the control section designated as the operational system to be securely connected to the monitoring apparatus.

The redundant switching control apparatus of the present invention in the above configuration has such a configuration of the two control sections that the operational system control section sends to the standby system control section above, upon reception of a switching command from the monitoring apparatus, the switching request signal instructing that the standby system control section should be switched over to the operational system. This configuration allows switching without the need for any external apparatus.

The redundant switching control apparatus of the present invention in the above configuration has such a configuration that the control section that has become the operational system after the switching sets a switching enable/disable signal to a switching disabled state immediately after the switching. This configuration can prevent continuous switching control from the monitoring apparatus and prevent switching immediately after switching (switching back).

The redundant switching control method of the present invention has a redundant configuration of an operational system and a standby system comprising two control sections, one operating as the operational system controlling the controlled section, with these two control sections connected via signal lines that transmit signals indicating one of a normal/abnormal state, mounted/unmounted state, switching enabled/switching disable state or operating/non-operating state of the own control section to the other control section and performs switching between the operational and standby systems by having one of these two control sections recognize the state of the other based on the signal above via these signal lines.

This configuration can implement redundant switching control and determination of the operational system at startup without providing any switching section as in the case of the prior art, which avoids complexity in the configuration and control of the entire apparatus and eliminates the need to consider influences of a fault in the switching section itself on the entire apparatus.

The redundant switching control method of the present invention connects the two control sections to a monitoring apparatus via a switching section, and if one of these control sections becomes the operational system, this control section turns ON the switching section through ON/OFF control of the control section of the operational system, turns OFF the switching section when the control section above becomes the standby system, and upon reception of a switching command from the monitoring apparatus, the control section of the operational system above sends a switching request signal instructing that the standby system control section should be switched over to the operational system to the standby system control section above.

This method allows the control section that has become the operational system to be securely connected to the monitoring apparatus, making it possible to implement switching without the need for any external apparatus.

As explained above, the present invention can configure functions of controlling switching between two control sections in a redundant configuration of operational and standby systems, specification of the initial operational system when the two systems are started simultaneously and prohibition of switching back, without complexity.

The present invention is not limited to the above described embodiments, and various variations and modifications may be possible without departing from the scope of the present invention.

This application is based on the Japanese Patent Application No.HEI 11-143298 filed on May 24, 1999, entire content of which is expressly incorporated by reference herein.

## Claims

1. A redundant switching control apparatus having a redundant configuration of an operational system and standby system comprising:
two control means (101,102), one operating as the operational system controlling controlled means, connected via signal lines carrying signals for switching from the operational system to the standby system or from the standby system to the operational system, carrying out switching between the operational system and the standby system by recognizing the state of each other from said signal of the other via these signal lines.

2. The redundant switching control apparatus according to claim 1, wherein the two control means (101,102) further comprise a function of mutually transmitting an alarm signal indicating whether one of the two control means is normal or abnormal to the other via signal lines.

3. The redundant switching control apparatus according to claim 1, wherein the two control means (101,102) further comprise a function of mutually transmitting a mounting signal indicating whether one of the two control means is mounted or unmounted to the other via signal lines.

4. The redundant switching control apparatus according to claim 1, wherein the two control means (101,102) further comprise a function of mutually transmitting a switching enable/disable signal indicating whether switching of one of the two control means is enabled or disabled to the other via signal lines, the control means of the operational system, if said two control means are started simultaneously, sets said switching enable/disable signal to a switching disabled state, and the control means of the standby system sets said switching enable/disable signal to a switching enabled state.

5. The redundant switching control apparatus according to claim 1, wherein the two control means (101,102) further comprise a function of mutually transmitting an operating status signal indicating whether one of the two control means is operating or not to the other via signal lines.

6. The redundant switching control apparatus according to claim 1, wherein the two control means (101,102) further comprise timing means, and if said two control means are started simultaneously, the control means of the operational system sets an arbitrary timing in the timing means of the own means, determines the status of the other control section within this set time from at least one of the operating status signal, switching enable/disable signal, mounting signal or alarm signal to mutually switch between the operational system and standby system, and switching between the operational system and standby system takes place according to this determination result.

7. The redundant switching control apparatus according to claim 1, wherein if said two control means are started simultaneously, the control means of the standby system sets an arbitrary timing in the timing means of the own means, determines the status of the other control means within this set time from the operating status signal, mounting signal or alarm signal to mutually switch between the operational system and standby system, and switching between the operational system and standby system takes place according to this determination result.

8. The redundant switching control apparatus according to claim 1, further comprising a monitoring apparatus (110) to monitor the operating status of the two control means connected to the two control means via switch means (105) for performing ON/OFF operation, wherein if either control means becomes the operational system, the control means of the operational system turns ON said switch means and turns OFF if said control means becomes the standby system.

9. The redundant switching control apparatus according to claim 8, wherein upon reception of a switching command from the monitoring apparatus (110), the control means of the operational system sends a switching request signal instructing that the control means of the standby system should be switched over to the operational system to the control means of said standby system.

10. The redundant switching control apparatus according to claim 8, wherein the control means that has become the operational system after the switching sets the switching enable/disable signal to a switching disabled sate during a predetermined period of time immediately after the switching.

11. A base station apparatus comprising a redundant switching control apparatus, said redundant switching control apparatus having a redundant configuration of an operational system and standby system comprising:
two control means, one operating as the operational system controlling controlled means, connected via signal lines carrying signals for switching from the operational system to the standby system or from the standby system to the operational system, carrying out switching between the operational system and the standby system by recognizing the state of each other from said signal of the other via these signal lines.

12. A redundant switching control method having a redundant configuration of an operational system and standby system comprising:
two control means, one operating as the operational system controlling controlled means, connected via signal lines carrying signals indicating one of a normal/abnormal state, mounted/unmounted state, switching enabled/disabled state or operating/non-operating state of the own control means to the other control means, carrying out switching between the operational system and the standby system by recognizing the state of each other from said signal of the other via these signal lines.

13. The redundant switching control method according to claim 12, wherein the two control means are connected to a monitoring apparatus (110) via switch means (105), and if either control means becomes the operational system, said switch means is turned ON through ON/OFF control of the control means of the operational system and turned OFF if said control means becomes the standby system and upon reception of a switching command from the monitoring apparatus, the control means of said operational system sends a switching request signal instructing that the control means of the standby system should be switched over to the operational system to the control means of said standby system.
